# EUROPEAN PATENT APPLICATION

(11) **EP 2 642 559 A1**
(43) Date of publication of application: **25.09.2013**
(21) Application number: 13157723.1
(22) Date of filing: 05.03.2013
(51) Int. Cl.: H01M 2/20, H01M 2/30

(54) **Battery assembly and electrically conductive member**

(30) Priority: 22.03.2012 JP 2012065211
(71) Applicant: Kabushiki Kaisha Toshiba, Tokyo 105-8001 (JP)
(72) Inventor: Shimizu, Hideo, Tokyo, 105-8001 (JP); Ishii, Tadasu, Tokyo, 105-8001 (JP); Matsuo, Tatsumi, Tokyo, 105-8001 (JP); Terada, Takahiro, Tokyo, 105-8001 (JP); Ogawa, Takayuki, Tokyo, 105-8001 (JP)
(74) Representative: Bokinge, Ole

(57) **Abstract**

According to one embodiment, battery assembly (1) includes casing (3), accumulators (7), and conductive member (8). The conducive member has two first walls, two second walls, and third wall. One of the first walls is connected to one of a cathode and an anode of one of the accumulators, and extended along a front surface of the casing. Other one of the first walls is connected to one of the cathode and the anode of other one of the accumulators, and extended along the front surface. The second walls are connected to the first walls via two first curve portions, respectively, and extended in direction crossing the front surface. The third wall is connected to the second walls via two second curve portions, respectively, and extended over between the two second walls in direction along the front surface at a position apart from the front surface.

## Description

### FIELD

Embodiments described herein relate generally to a battery assembly and an electrically conductive member.

### BACKGROUND

Conventionally, there is known a battery assembly provided with a bus bar for electrically connecting the electrodes of a plurality of electric accumulators.

For such battery assembly, a configuration that is hard to be broken by exerted external forces, etc., is preferred, for example.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is a perspective view of an example of a battery assembly according to a first embodiment;
FIG. 2 is a cross-sectional view of the portion II of FIG. 1, in the first embodiment;
FIG. 3 is an exploded perspective view of an example of the battery assembly in the first embodiment;
FIG. 4 is a cross-sectional view of a portion of an example of an electrical accumulator of the battery assembly in the first embodiment;
FIG. 5 is an enlarged view of the portion V of FIG. 2, in the first embodiment;
FIG. 6 is a perspective view of an example of a second component of an electrically conductive portion included in the battery assembly in the first embodiment;
FIG. 7 is a perspective view of the example of the second component of the electrically conductive portion included in the battery assembly, as viewed from anther angle than that of FIG. 6, in the first embodiment;
FIG. 8 is a perspective view of an example of an electrically conductive portions included in the battery assembly in the first embodiment;
FIG. 9 is a schematic side view of an example of a bus bar included in the battery assembly in the first embodiment;
FIG. 10 is a schematic side view of an example of a bus bar included in the battery assembly in a state in which a tensile force is acted to the bus bar, in the first embodiment;
FIG. 11 is a schematic side view of an example of a bus bar included in a battery assembly in a state in which the tensile force is acted to the bus bar, according to a reference example;
FIG. 12 is a perspective view of an example of a wall of a casing included in the battery assembly as viewed from inside the casing, in the first embodiment;
FIG. 13 is a plan view of a portion of the wall illustrated in FIG. 12 as viewed from the inside of the casing, in the first embodiment.
FIG. 14 is a cross-sectional view taken along the line XIV-XIV of FIG. 13, in the first embodiment;
FIG. 15 is a perspective view of an example of a second component of an electrically conductive portion included in a battery assembly according to a first modification;
FIG. 16 is a cross-sectional view of a battery assembly taken at a position the same as that of FIG. 5, according to a second modification; and
FIG. 17 is a perspective view of an example of a bus bar included in a battery assembly according to a third modification.

### DETAILED DESCRIPTION

In general, according to one embodiment, a battery assembly comprises a casing, a plurality of electric accumulators, and a conductive member. The casing has a front surface and provided with a plurality of containers. The electric accumulators are housed in the containers, respectively. Each of the electric accumulators has a cathode and an anode. The conductive member has two first walls, two second walls, and a third wall. One of the first walls is connected to one of the cathode and the anode of one of the electric accumulators and extended along the front surface of the casing. Other one of the first walls is connected to one of the cathode and the anode of other one of the electric accumulators and extended along the front surface of the casing. The second walls are connected to the first walls via two first curve portions, respectively, and are extended in a direction crossing the front surface. The third wall is connected to the second walls via two second curve portions, respectively, and extended over between the two second walls in a direction along the front surface at a position apart from the front surface.

A plurality of exemplary embodiments and modifications described in the following include like components. In the following, therefore, like components will be referenced by common reference numerals and redundant explanation will be omitted. In the drawings, directions (X direction, Y direction, and Z direction) are illustrated for the convenience of explanation. The X direction, the Y direction, and the Z direction are orthogonal to one another.

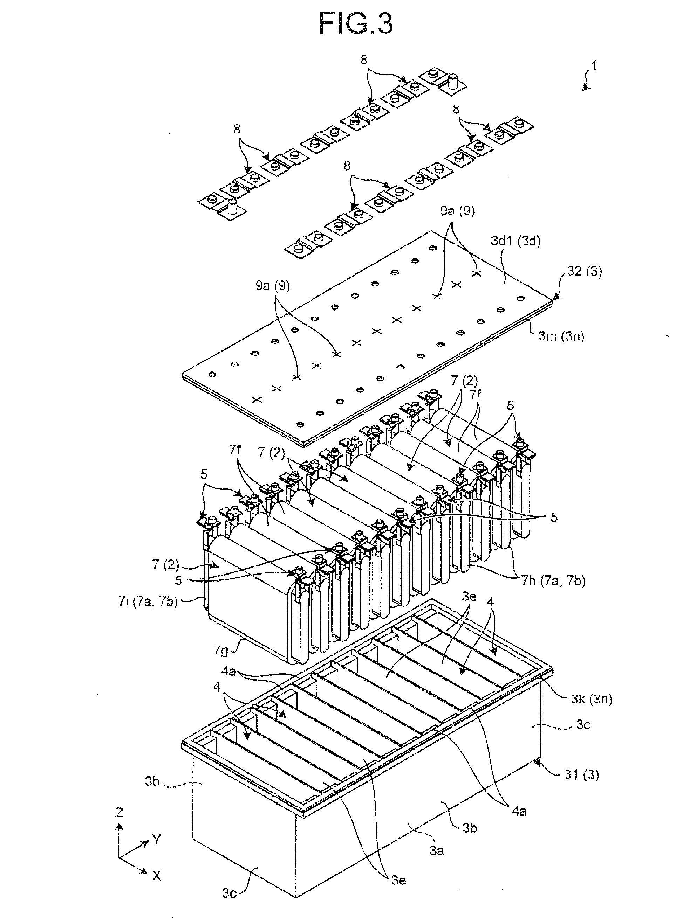

In a first embodiment, as an example, a battery assembly 1 (a battery) includes a plurality of single cells 2 (single batteries or single cells, see FIG. 3, etc.) connected to each other in series or in parallel. The battery assembly 1 can be, as an example, constructed as a secondary battery (a storage battery or a rechargeable battery). The battery assembly 1 can be installed in a variety of devices, machines, and facilities. Specifically, the battery assembly 1 is used as power sources of relatively small-sized devices, etc., such as cellular phones, personal computers, and portable music players. The battery assembly 1 is also used as power sources of relatively large-sized devices such as electric bicycles, hybrid electric vehicles, and electric vehicles. The battery assembly 1 is also used as portable power sources such as power sources of vehicles and bicycles (movable bodies). The battery assembly 1 is also used as stationary power sources such as power sources of POS (point of sales) systems. A plurality of battery assemblies 1 in the present embodiment can be installed in a variety of devices, etc., as a set in which the battery assemblies 1 are connected to each other in series or in parallel. The battery assembly 1 can be therefore referred to as a battery module (a battery unit). The number, arrangement, etc., of the single cells 2 included in the battery assembly 1 are not limited by those disclosed in the present embodiment. The battery assembly 1 may include wiring for monitoring the voltage and temperature of the batteries, a monitoring board, a control board for battery control, etc.

In the present embodiment, each of the single cells 2 can be configured by, as an example, a lithium ion secondary battery. Each of the single cells 2 may be another secondary battery such as a nickel hydrogen battery, a nickel cadmium battery, and a lead battery. The lithium ion secondary battery is one type of non-aqueous electrolyte secondary batteries, in which lithium ions in an electrolyte play a role in electric conduction. The cathode material may include, for example, a lithium-manganese complex oxide, a lithium-nickel complex oxide, a lithium-cobalt complex oxide, a lithium-nickel-cobalt complex oxide, a lithium-manganese-cobalt complex oxide, a spinel type lithium-manganese-nickel complex oxide, and a lithium-phosphorous complex oxide having the olivine structure. The anode material may include, for example, an oxide-based material such as lithium titanate (LTO), a carbonaceous material, and a silicon-based material. The electrolyte (an electrolytic solution as an example) may include, for example, an organic solvent such as ethylene carbonate, propylene carbonate, diethyl carbonate, ethyl methyl carbonate, and dimethyl carbonate to which, for example, a lithium salt such as a fluorine-based complex salt (for example, LiBF4 and LiPF6) is added may be used singly or in combination.

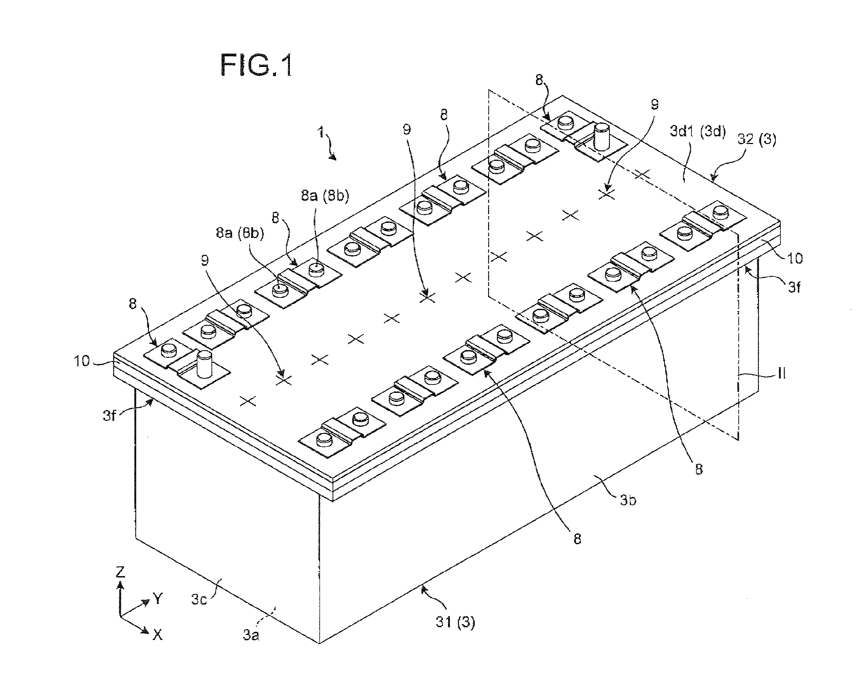

In the present embodiment, as an example, as illustrated in FIGS. 1 to 3, etc., a casing 3 (case or housing) has a rectangular parallelepiped appearance that is relatively long in one direction (the Y direction, the arrangement direction of the single cells 2, the alignment direction of the single cells 2, or the overlapping direction of the single cells 2). In the present embodiment, as an example, the casing 3 has a plurality of walls (wall portions) such as a bottom wall 3a, a side wall 3b, an end wall 3c, a top wall 3d, and a plurality of partition walls 3e. The bottom wall 3a (wall) is formed in a quadrangular (for example, rectangular) plate shape. The bottom wall 3a extends along the XY plane. The side wall 3b (wall) is formed in a quadrangular (for example, rectangular) plate shape. The side wall 3b is connected to the end of the bottom wall 3a in the lateral direction (the X direction) and extends in a direction crossing the bottom wall 3a (a direction orthogonal thereto or the YZ plane as an example in the present embodiment). The end wall 3c (wall) is formed in a quadrangular (for example, rectangular) plate shape and is connected to the end of the bottom wall 3a in the longitudinal direction (the Y direction). The end wall 3c extends in a direction crossing the bottom wall 3a (a direction orthogonal thereto or the XZ plane as an example in the present embodiment). The side wall 3b is connected to the adjacent end wall 3c. The top wall 3d (wall) is formed in a quadrangular (for example, rectangular) plate shape. The top wall 3d is connected to the ends of the side wall 3b and the end wall 3c and extends in a direction crossing the side wall 3b and the end wall 3c (a direction perpendicular thereto or the XY plane as an example in the present embodiment). The bottom wall 3a and the top wall 3d are arranged collaterally with their inner surfaces (the inner surfaces of the casing 3) facing (opposing) each other (parallel to each other as an example in the present embodiment). The two side walls 3b are arranged collaterally with their inner surfaces facing (opposing) each other (parallel to each other as an example in the present embodiment). The two end walls 3c are arranged collaterally with their inner surfaces facing each other (parallel to each other as an example in the present embodiment).

The casing 3 has the partition walls 3e (wall) The partition walls 3e are each formed in a quadrangular (for example, rectangular) plate shape. The partition walls 3e are each positioned in between the bottom wall 3a and the top wall 3d. The partition walls 3e are each arranged collaterally with the end walls 3c (in parallel therewith as an example in the present embodiment) and extends along the XZ plane. The partition walls 3e are arranged collaterally with the surfaces facing (opposing) each other (parallel to each other as an example in the present embodiment). The spaces (pitches or pitches in the Y direction) between the partition walls 3e are nearly constant. The spaces may be changed locally, in which, as an example, the spaces (pitches or pitches in the Y direction) in the intermediate part of the row of the partition walls 3e are wider than those in the ends of the row. The inside of the casing 3 is divided into a plurality of flat rectangular parallelepipedal chambers 4 (housing chambers or containers) by the partition walls 3e. The chambers 4 are arranged in the Y direction. At the ends of the row of the chambers 4 in the longitudinal direction, the chamber 4 is surrounded by the bottom wall 3a, the top wall 3d, the partition wall 3e, and the end wall 3c. In the intermediate part of the row of the chambers 4 in the longitudinal direction (other than the ends in the longitudinal direction), the chamber 4 is surrounded by the bottom wall 3a, the top wall 3d, and the two partition walls 3e. The widths (widths in the Y direction) of the chambers 4 are nearly constant. The widths may be changed locally, in which, as an example, the widths (the widths in the Y direction) in the intermediate part of the row of the chambers 4 are wider than those in the ends of the row. The casing 3 is formed of an insulating synthetic resin material (for example, modified PPE (polyphenylene ether)), PFA (perfluoro alkoxy alkane or tetrafluoroethylene-perfluoro alkyl vinyl ether copolymer), etc. The synthetic resin material for the casing 3 may be a thermoplastic resin, including an olefin resin such as PE, PP, and PMP, a polyester resin such as PET, PBT, and PEN, a POM resin, a polyamide resin such as PA6, PA66, and PA12, a crystalline resin such as a PPS resin and an LCP resin and an alloy resin formed thereof, and a non-crystalline resin such as PS, PC, PC/ABS, ABS, AS, modified PPE, PES, PEI, and PSF and an alloy resin formed thereof.

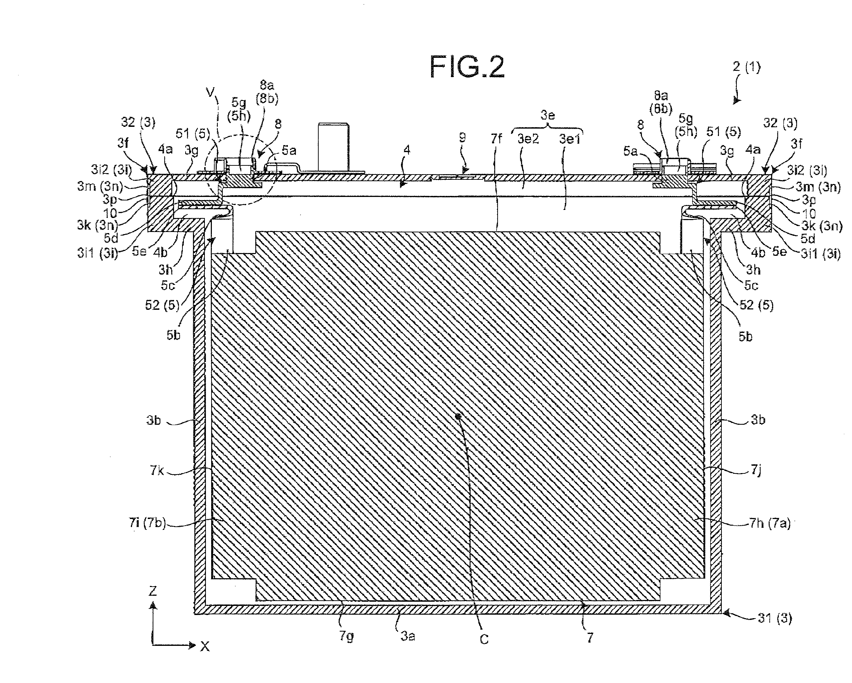

In the present embodiment, as an example, as illustrated in FIGS. 2 and 3, etc., the casing 3 is configured by a combination of a plurality of (two as an example in the present embodiment) members (a first member 31 and a second member 32). The first member 31 includes the bottom wall 3a, the side wall 3b, the end wall 3c, and a portion (a part 3e1) of the partition wall 3e, while the second member 32 includes the top wall 3d and a portion (a part 3e2) of the partition wall 3e. The second member 32 (the top wall 3d) covers an opening 4a of the chamber 4.

In the present embodiment, as an example, the casing 3 has a protruding portion 3f. In the protruding portion 3f, the periphery of the top wall 3d protrudes further outward than the outer surface of the side wall 3b in a flange manner. The protruding portion 3f has an upper wall 3g (wall), a lower wall 3h (wall), and a side wall 3i (wall). The upper wall 3g is the periphery of the top wall 3d of the second member 32. The lower wall 3h projects from the end on the second member 32 side of the side wall 5b of the first member 31, while facing the upper wall 3g spaced apart therefrom. The side wall 3i extends along a direction crossing the upper wall 3g and the lower wall 3h (a direction orthogonal thereto as an example in the present embodiment). The side wall 3i has a part 3i1 on the first member 31 side and a part 3i2 on the second member 32 side. A space 4b (a gap, housing chamber, or container) is formed within the protruding portion 3f. In the present embodiment, as an example, as illustrated in FIG. 2, a portion of an electrically conductive portion 5 [connecting portions 5d, 5e, etc., as an example in the present embodiment) is housed within the space 4b. The members (the first member 31 and the second member 32 as an example in the present embodiment) are connected through, for example, heat seal, adhesion by an adhesive, and fastening by fixing members (for example, screws). In the present embodiment, as an example, the portion (the part 3e1) of the first member 31 and the portion (the part 3e2) of the second member 32 of the partition wall 3e are heat pealed, while other portion (the part 3i1) of the first member 31 and other portion (the part 3i2) of the second member 32 of the side wall 3i are heat sealed. In the present embodiment, as an example, the chambers 4 within the casing 3 are formed as spaces that do not communicate with each other and are independent (isolated) from each other.

In the present embodiment, as an example, the single cells 2 are configured by the walls of the casing 3 (the bottom wall 3a, side wall 3b, end wall 3c, top wall 3d, partition wall 3e, etc.), an electrical accumulator 7, and the electrically conductive portion 5. The walls of the casing 3 configure the chamber 4. The electrical accumulator 7 is housed within the chamber 4. The electrically conductive portion 5 is electrically connected to the electrical accumulator 7.

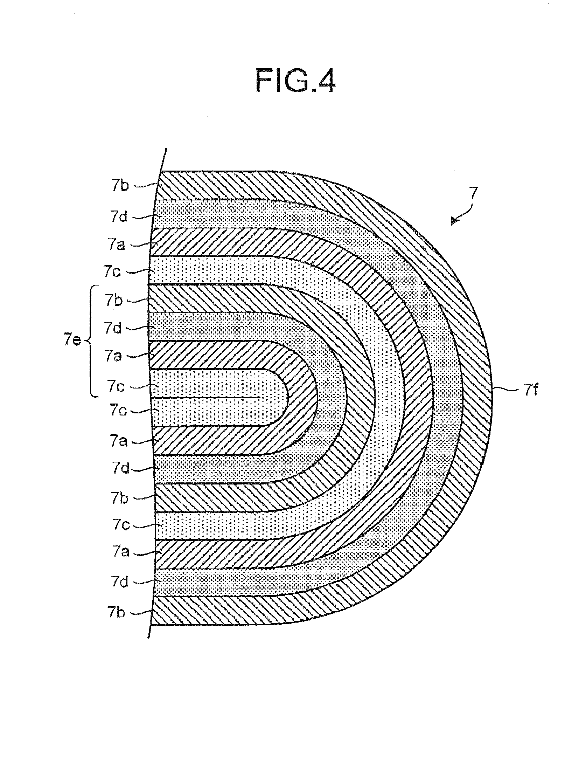

In the present embodiment, as an example, the electrical accumulator 7 (a coil or charger and discharger) has a pair of sheet-shaped electrodes 7a, 7b (a cathode or anode) and sheet-shaped intervening members 7c, 7d (separators). The intervening members 7c, 7d are arranged in between the electrodes 7a, 7b. The electrical accumulator 7 is configured by a layered body 7e illustrated in FIG. 4 that is wound around (folded or folded back) for a plurality of times. The layered body 7e is configured by the intervening member 7c, the electrode 7a, the intervening member 7d, and the electrode 7b that are stacked in this order. FIG. 4 illustrates only a part in which the layered body 7e is wound two times at one end 7f of the electrical accumulator 7. The layered body 7e is, as illustrated in FIG. 3, bent at the one end 7f and the other end 7g. The layered body 7e is stacked in a flat manner between the one end 7f and the other end 7g. The layered body 7e is wound spirally for a plurality of times to form a flat shape having an oval cross-sectional shape. The one end 7f and the other end 7g are an example of convex parts in which the perimeter of the electrical accumulator 7 are convex outward. In the present embodiment, as an example, in the layered body 7e, the electrode 7a is displaced toward one of sides in the width direction of the intervening members 7c, 7d. On the other hand, the electrode 7b is displaced toward other one of the sides in the width direction of the intervening members 7c, 7d. The electrode 7a therefore projects to one side in the axial direction of the layered body 7e (the axial direction of the winding of the layered body 7e or the X direction as an example in the present embodiment). On the other hand, the electrode 7b projects to the other side in the axial direction of the layered body 7e. In other words, protruding portions 7h, 7i of the electrodes 7a, 7b project in the axial direction of the winding of the layered body 7e (the X direction as an example of the present embodiment). A second part 5b of the electrically conductive portion 5 is electrically connected to the protruding portion 7h of the electrode 7a. The second part 5b of another electrically conductive portion 5 is electrically connected to the protruding portion 7i of the electrode 7b. In the present embodiment, as an example, the protruding portions 7h, 7i and the second part 5b are joined (coupled, fixed, connected, or electrically connected) by welding, etc.

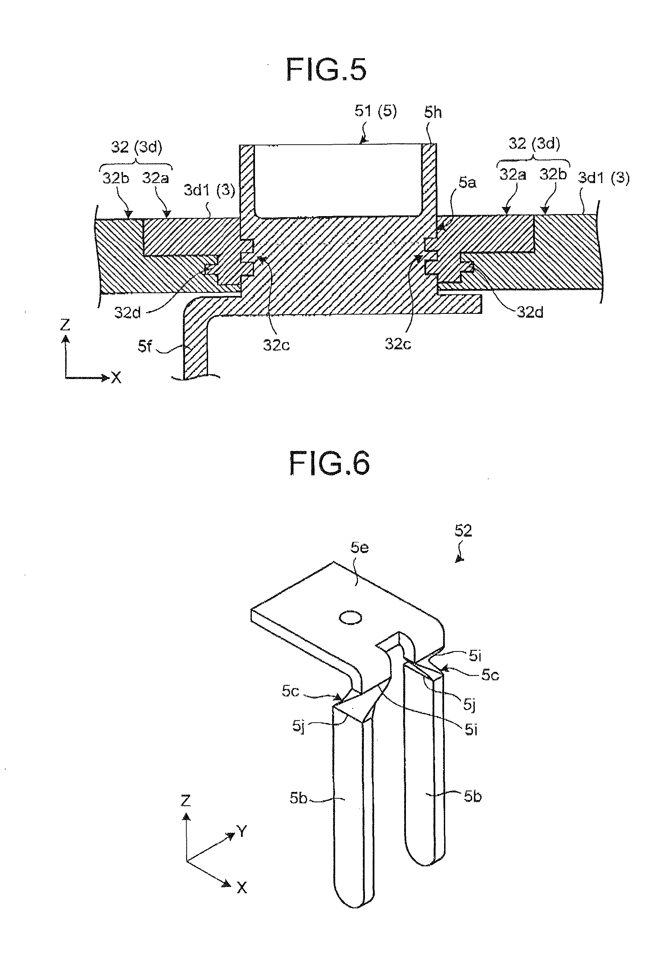

In the present embodiment, as an example, the electrically conductive portion 5 (an electrically conductive member, electrically conductive component, lead component, terminal component, or component) has a first part 5a, the second part 5b, and a third part 5c. The electrically conductive portion 5 is positioned on the top wall 3d side of the electrical accumulator 7. The first part 5a is supported by the casing 3. In the present embodiment, as an example, as illustrated in FIG. 5, the first part 5a is integrated with the top wall 3d of the casing 3 by insert molding. As illustrated in FIG. 2, the second part 5b is in contact with the electrodes 7a, 7b of the electrical accumulator 7. In the present embodiment, as an example, the second part 5b and the electrodes 7a, 7b are joined (coupled, fixed, or connected) by welding, etc., and are electrically connected. The third part 5c is positioned in between the first part 5a and the second part 5b and is twisted. In the present embodiment, as an example, the electrically conductive portion 5 has a plurality of (two as an example in the present embodiment) second parts 5b. The second part 5b is formed in a band shape (a plate shape). The two second parts 5b, with their surfaces facing each other (nearly parallel), hold the corresponding protruding portions 7h, 7i therebetween from both sides in the Y direction (the thickness direction of the electrical accumulator 7 (the layered body 7e) or the overlapping direction of the single cells 2 (the chambers 4)). The two second parts 5b of the electrically conductive portion 5 and the corresponding protruding portions 7h, 7i held therebetween are joined (coupled, fixed, connected, or electrically connected) by welding, etc. With the foregoing configuration, the electrical accumulator 7 is supported by the top wall 3d through the electrically conductive portion 5. With reference to FIGS. 2 and 3, in the present embodiment, as an example, it can be understood that the electrical accumulator 7 is supported by the top wall 3d through the two electrically conductive portions 5 through both ends. The electrically conductive portion 5 is, as an example, formed of a conductor with relatively high electric conductivity (a metallic material such as an alloy containing silver, copper, aluminum, etc.).

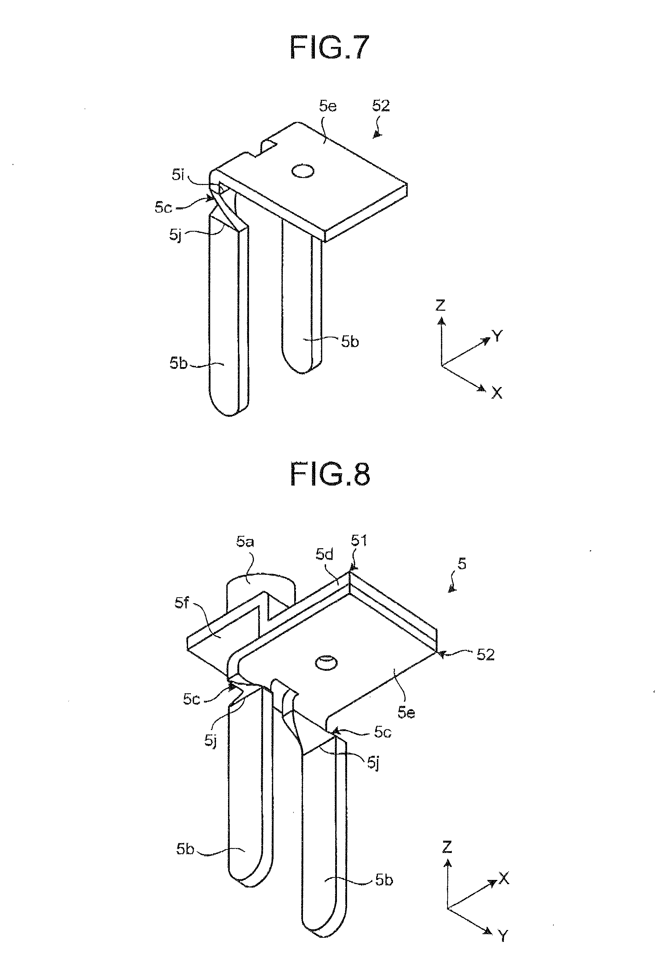

In the present embodiment, as an example, as illustrated in FIG. 8, the electrically conductive portion 5 is configured by integrating a plurality of components (electrically conductive members or a first component 51 and a second component 52 as an example in the present embodiment). Specifically, the connecting portion 5d of the first component 51 and the connecting portion 5e of the second component 52 are joined (coupled, fixed, connected, or electrically connected) by welding, etc., to configure the electrically conductive portion 5.

As illustrated in FIGS. 2, 5, and 8, the first component 51 has the first part 5a, the connecting portion 5d, and an intermediate portion 5f (a connecting portion or intervening portion). The first part 5a is formed in a cylindrical (columnar or tubular) shape and passes through the top wall 3d. The first part 5a is formed with a recess 5g that communicates with the outside of the casing 3. The recess 5g on the inside of the casing 3 is closed. A wall 5h surrounding the recess 5g and a bus bar 8 (an electrically conductive member) are joined (coupled, fixed, connected, or electrically connected) with each other by welding, etc. In other words, the wall 5h (the first part 5a or the first component 51) is an example of a terminal. The part of the electrically conductive portion 5 other than the wall 5h is an example of a lead. The connecting portion 5d is formed in a quadrangular plate shape. The connecting portion 5d is positioned along the top wall 3d and spaced apart from the top wall 3d. The intermediate portion 5f is foamed in a band shape (a plate shape) bent in an L shape. The intermediate portion 5f is positioned in between the first part 5a and the connecting portion 5d. The intermediate portion 5f connects the first part 5a and the connecting portion 5d with each other. The intermediate portion 5f and the connecting portion 5d are a band-shaped (plate-shaped) part continuously bent in an S shape (a crank shape).

As illustrated in FIGS. 6 to 8, the second component 52 has the connecting portion 5e, the plurality of (two as an example of the present embodiment) second parts 5b, and the third part 5c. The connecting portion 5e is formed in a quadrangular plate shape and is positioned on a side of the connecting portion 5d opposite the top wall 3d. The connecting portion 5d of the first component 51 and the connecting portion 5e of the second component 52 are stacked in their thickness direction and are joined (coupled, fixed, connected, or electrically connected) by welding, etc. The third part 5c is positioned in between the connecting portion 5e and the second part 5b. With reference to FIGS. 6 to 8, it can be understood that an end 5i on the connecting portion 5e side of the third part 5c and an end 5j on the second part 5b side of the third part 5c are twisted with respect to each other. With reference to FIGS. 6 to 8, it can be also understood that the third part 5c is twisted between the ends 5i, 5j about an axis in a direction along which the second part 5b extends (the Z axis). The second component 52 can be obtained by bending the second parts 5b and the third part 5c integrally starting from the end 5i from the connecting portion 5e about the Y axis by nearly 90° (deg) and twisting the third part 5c about the Z axis by nearly 90° (deg). In the present embodiment, by providing the electrically conductive portion 5 with the twisted third part 5c, as an example, the flexibility and buffering effect of the second component 52 (electrically conductive portion 5) are likely to be improved as compared to a case in which the twisted third part 5c is absent. In the present embodiment, as an example, the two third parts 5c of the one second component 52 are twisted in opposite directions.

In the formation of the second component 52, as an example, first, a long slender U-shaped original member (an original shape, a developed shape before forming the second component 52, a punched shape, or a cut-off shape) in which two second parts 5b extend from the connecting portion 5e is obtained from a flat plate member (a metallic member) by press forming, etc. Then, the two second parts 5b are bent with respect to the connecting portion 5e starting from the end 5i (see FIG. 6) by nearly 90° (deg). Furthermore, the basal part of the second part 5b with respect to the connecting portion 5e is twisted to obtain the third part 5c. The bending and twisting may be performed nearly at the same time. Accordingly, in the present embodiment, as an example, the twisted third part 5c is provided, thereby obtaining the two second parts 5b that extend nearly in parallel and face each other in the thickness direction of the electrical accumulator 7 from the original member before forming (before bending) extending nearly in parallel from the connecting portion 5e. Without the twisted third part 5c, the original member becomes a T shape. Therefore, the arrangement number of the original member in the plate member before being pressed is likely to be small, and the component number (efficiency or layout efficiency) with respect to the area of the plate member is likely to be small. In the present embodiment, as an example, the layout efficiency of the second component 52 in the plate member is likely to be improved. The second component 52 may be appropriately subjected to heat treatment or surface treatment.

As can be understood from FIG. 2, in the present embodiment, as an example, the third part 5c is positioned apart from the one end 7f (the convex part) as viewed from the protruding direction (the Z direction) of the one end 7f of the electrical accumulator 7. In other words, the third part 5c is positioned at one side of the one end 7f of the electrical accumulator 7 toward a direction in which the one end 7f protrudes, and is positioned between the one end 7f and the corner of the chamber 4. The twisted third part 5c is likely to occupy a larger area within the casing 3 (within the chamber 4) as compared to a part that is not twisted. The one end 7f and the other end 7g protrude while being convex outward (the Z direction as an example in the present embodiment). A gap is therefore likely to be formed between the corner of the chamber 4 and each of the one end 7f and the other end 7g. In the present embodiment, accordingly, the third part 5c is arranged using an area (a space, the corner of the chamber 4 facing the convex part of the electrical accumulator 7, or a gap) between the one end 7f and the wall of the casing 3 positioned beside the one end 7f (the top wall 3d, partition wall 3e, or end wall 3c as an example in the present embodiment). Here, the layered body 7e of the electrical accumulator 7 is bent and protruded to form the one end 7f. According to the present embodiment, therefore, as an example, the efficiency of the layout of the components is likely to be improved. As an example, therefore, the battery assembly 1 is likely to be formed in a smaller size. The position and the specifications such as the direction of twist and the number of twisting of the third part 5c may be appropriately changed.

In the present embodiment, as an example, the first component 51 and the second component 52 are joined (for example, by welding) after the first component 51 is integrated with the second member 32 including the top wall 3d by insert molding, etc., and the second component 52 is integrated with the electrical accumulator 7 by welding, etc. In other words, in the present embodiment, the first component 51 fixed to the second member 32 and the second component 52 fixed to the electrical accumulator 7 are integrated with each other. In the present embodiment, thus, the electrically conductive portion 5 is divided into a plurality of components. The electrically conductive portion 5 is, therefore, as an example, likely to be installed in the battery assembly 1 more easily and with higher precision. If the electrically conductive portion 5 is a one-piece component that is not divided into the first component 51 and the second component 52, it becomes necessary to perform: (1) a process in which a plurality of electrically conductive portions 5 are insert-molded in the second member 32 while the electrically conductive portions are joined to the electrical accumulator 7; or (2) a process in which the electrically conductive portions 5 that are insert-molded in the second member 32 are joined to a plurality of the electrical accumulators 7. Both Processes (1) and (2) are likely to require time and effort and likely to lead to increased errors.

In the present embodiment, as an example, as illustrated in FIG. 2, the connecting portions 5d, 5e of the first component 51 and the second component 52 are positioned further apart from a central part C of the electrical accumulator 7 than the second part 5b. The connecting portions 5d, 5e are positioned apart from the electrical accumulator 7 as viewed from a direction in which the first component 51 and the second component 52 overlap with each other (a direction in which the first member 31 and the electrical accumulator 7 overlap with each other, a direction in which the first member 31 and the second member 32 overlap with each other, or the Z direction). The connecting portions 5d, 5e are provided extending (projecting) in a direction away from the center of the electrical accumulator 7 from ends 7j, 7k of the electrical accumulator 7 (ends 7j, 7k to which (the second part 5b of) the electrically conductive portion 5 is joined or ends 7j, 7k of the layered body 7e in the axial direction, as an example in the present embodiment). In the present embodiment, as an example, therefore, in the process in which the first component 51 and the second component 52 are joined, influence by the electrical accumulator 7 (as an example, difficulty in work through the interference with the electrical accumulator 7) or influence on the electrical accumulator 7 (as an example, damage to the outer surface of the electrical accumulator 7) is likely to be reduced. When the first component 51 and the second component 52 are welded (adhered), the influence of heat is hard to be exerted on the electrical accumulator 7.

In the present embodiment, as an example, as illustrated in FIG. 5, at least an area of the top wall 3d of the casing 3 through which the electrically conductive portion 5 passes is formed of a plurality of (two as an example in the present embodiment) synthetic resin materials having different quality. In this kind of battery assembly 1 (battery), it is important for gas generated in the chamber 4 not to leak outside of the casing 3, thereby it is desired to ensure the airtightness at the boundary between the top wall 3d and the electrically conductive portion 5. If the entire top wall 3d is insert molded with one kind of synthetic resin material with the electrically conductive portion 5 included, there is concern that it is hard to ensure pressure on the contact part between the electrically conductive portion 5 and the top wall 3d during forming. Furthermore, there is concern that the airtightness between the electrically conductive portion 5 and the top wall 3d degrades, making it hard to ensure desired airtightness. In this regard, in the present embodiment, as an example, a first part 32a of a first material is formed around the electrically conductive portion 5, and a second part 32b of a second material is formed around the first part 32a. Accordingly, as an example, first, the first part 32a of the first material can be formed while applying higher pressure to the periphery of the electrically conductive portion 5, and then, the second part 32b of the second material can be formed around the first part 32a. This, as an example, allows the airtightness between the first part 32a and the electrically conductive portion 5 to be more likely to be improved. As an example, the first material may have higher adhesiveness with respect to the material of the electrically conductive portion 5 (a metallic material as an example in the present embodiment) than that of the second material. As an example, the first material may be a crystalline material, while the second material may be a non-crystalline material. As an example, the first material may have a lower melting point than that of the second material. Accordingly, as an example, when forming the second part 32b, the first part 32a is heated by the second material (before being solidified) in a state having higher temperature than the first part 32a and fluidity. This may allow the first part 32a to be partially softened and improve the airtightness between the first part 32a and the second part 32b or the electrically conductive portion 5. In the present embodiment, as an example, the volume of the first part 32a is smaller than the volume of the second part 32b. Specifically, as an example, the first part 32a is provided around (in the vicinity of) the electrically conductive portion 5, and the other part of the top wall 3d (the second member 32) is the second part 32b. According to the present embodiment, therefore, as an example, pressure during the formation of the first part 32a is likely to be increased than pressure during the formation of the second part 32b, and the airtightness between the electrically conductive portion 5 and the first part 32a is likely to be improved. At the boundary between the first part 32a and the second part 32b, airtightness is more likely to be improved, since both the first part 32a and the second part 32b are synthetic resin materials. Furthermore, by incorporating the same kind of substance or the same substance into the first material and the second material, the adhesion between the first part 32a and the second part 32b is more likely to be improved, and airtightness is more likely to be improved. In the present embodiment, as an example, the first material forming the first part 32a may be a crystalline resin such as a polyamide resin such as PA6, PA66, and PA12 and an alloy resin formed thereof, while the second material forming the second part 32b may be a non-crystalline resin such as modified PPE, PES, PEI, and PSF and an alloy resin formed thereof.

In the present embodiment, as an example, the through part (the first part 5a) of the top wall 3d of the electrically conductive portion 5 and the first part 32a of the top wall 3d are configured as a rotating body about an axis along the through direction of the electrically conductive portion 5 (the Z direction or the thickness direction of the top wall 3d). In other words, the cross section perpendicular to the axis of the through part and the first part 32a has a circular shape (ring-like shape). Specifically, as an example, the wall 5h is formed in nearly a cylindrical shape, and the first part 5a is formed in a circular shape. In the present embodiment, as an example, therefore, when forming the first part 32a, and when forming the second part 32b, fluctuations in pressure at the boundary between the electrically conductive portion 5 and the first part 32a and at the boundary between the first part 32a and the second part 32b are likely to be reduced.

As illustrated in FIG. 5, a recess and protrusion structure 32c (a recessed portion, a protruding portion, a recessed groove, or a protrusion) can be provided at the boundary between the electrically conductive portion 5 and the first part 32a and at the boundary between the first part 32a and the second part 32b. The recess and protrusion structure 32c is formed to have circular shape (ring-like shape) about an axis along the thickness direction of the top wall 3d. In the present embodiment, as an example, therefore, airtightness is more likely to be improved, since a path at the boundary becomes long, and resistance at the boundary increases. The first part 32a has a protrusion 32d (a projecting part) that cuts into (enters) the second part 32b. Accordingly, as an example, when forming the second part 32b, the protrusion 32d is heated by the second material (before being solidified) in a state having higher temperature than the first part 32a and fluidity, and the protrusion 32d may partially soften or melt, thereby improving the adhesion between the first part 32a and the second part 32b. In other words, after the solidification of the second part 32b, the protrusion 32d may be formed as a melted part. The fact that the protrusion 32d has been melted by molding is revealed by checking the cross section, etc., of a product.

In this part, ensuring desired chemical resistance against electrolytes is required. If the entire top wall 3d is formed by one kind of synthetic resin material, there is concern that it might be difficult to achieve both the adhesion with the electrically conductive portion 5 and chemical resistance. Accordingly, in the present embodiment, as an example, the chamber 4 side of the first part 32a (the inside of the casing 3) is covered with the second part 32b having higher chemical resistance against electrolytes than the first part 32a. In the present embodiment, as an example, therefore, the first part 32a is not directly exposed to an electrolyte, thereby, as an example, making both the adhesion with the electrically conductive portion 5 and chemical resistance more likely to be achieved.

In the present embodiment, as an example, as illustrated in FIG. 2, (the wall 5h of) the first part 5a of the electrically conductive portion 5 passes through the top wall 3d of the second member 32 of the casing 3 to project out of the top wall 3d (casing 3) and is joined (coupled, fixed, connected, or electrically connected) to the bus bar 8 positioned outside the top wall 3d. The bus bar 8 electrically connects the electrodes 7a, 7b and the electrodes 7a, 7b of a plurality of different single cells 2 (electrical accumulators 7). When the single cells 2 are connected in series, the bus bar 8 electrically connects the electrode 7a (one of the cathode and anode) and the electrode 7b (other of the cathode and anode). The bus bar 8 is provided with a protruding portion 8b having a cylindrical (tubular) wall 8a. The protruding portion 8b protrudes toward outside of the casing 3. A through hole is formed within the protruding portion 8b. The cylindrical wall 5h (protruding portion) of the first part 5a is disposed within the tube (within the through hole) of the protruding portion 8b of the bus bar 8 being in nearly intimate contact therewith. The wall 5h and the wall 8a of the protruding portion 8b are joined (coupled, fixed, connected, or electrically connected) by welding, etc.

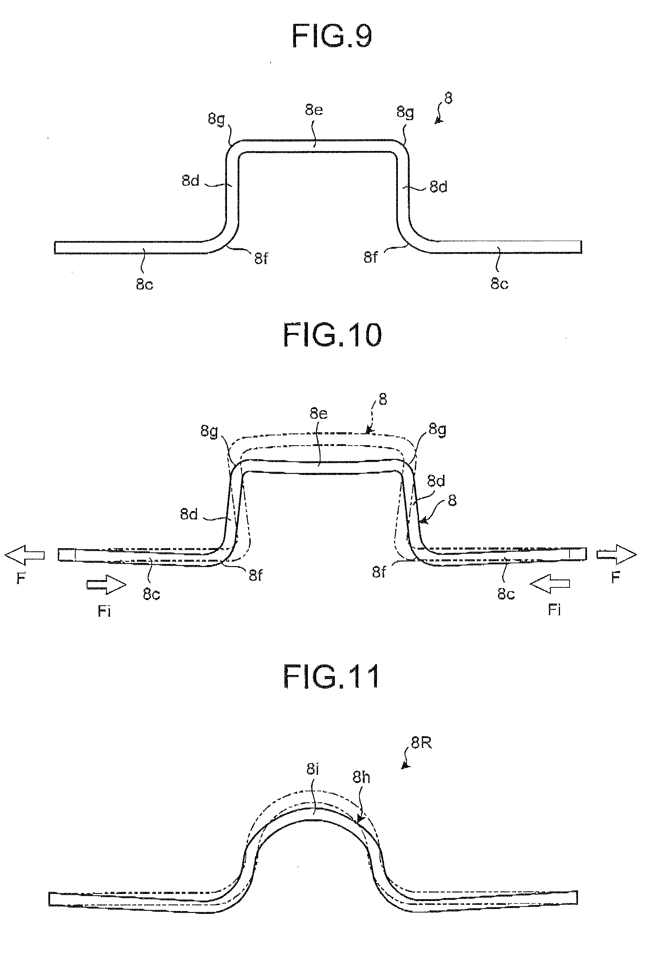

In the present embodiment, as an example, as illustrated in FIG. 9, the bus bar 8 has two first walls 8c, two second walls 8d, a third wall 8e, two first curve portions 8f, and two second curve portions 8g. Specifically, the bus bar 8 is formed in a hat shape (a crank shape) by bending one plate-shaped (band-shaped or strip-shaped) member at four parts (the two first curve portions 8f and the two second curve portions 8g). The first walls 8c, the second walls 8d, and the third wall 8e are all formed in a quadrangular plate shape (band shape). The two first walls 8c (cross walls or bottom walls) are positioned along a front side 3d1 of the top wall 3d. The protruding portion 8b is provided on the first wall 8c. The two second walls 8d (standing walls or side walls) are connected to the first walls 8c via the first curve portions 8f, respectively. The second walls 8d extend (stands up) in a direction crossing (a direction orthogonal to) the first walls 8c (the front side 3d1). The third wall 8e is provided apart from the two first walls 8c and the front side 3d1 of the top wall 3d across the two second walls 8d. The third wall 8e is connected to the two second walls 8d through the two second curve portions 8g. The third wall 8e is provided nearly parallel to the first walls 8c and the top wall 3d (the front side 3dl). The curvature (the curvature radius or bend radius) of the second curve portion 8g is smaller than the curvature (the curvature radius or bend radius) of the first curve portion 8f. In FIGS. 9 and 10, the protruding portion 8b is omitted for convenience.

When an external force F is exerted on the bus bar 8 having the aforementioned configuration in a direction in which the two first walls 8c depart from each other (see FIG. 10), the bus bar 8 becomes deformed from the state in FIG. 9 to the state in FIG. 10. In this situation, as illustrated in FIG. 10, the third wall 8e is bent so as to be put into a state in which the third wall 8e is convex toward the first walls 8c (toward the front side 3d1) at a larger curvature (curvature radius or bend radius) than the first curve portion 8f and the second curve portion 8g. According to research by the inventors, it has been found that, in a bus bar 8R illustrated in FIG. 11, when an external force as is the case with the bus bar 8 according to the present embodiment is exerted, stress is concentrated at a center 8i of a curve portion 8h, thereby making the maximum stress likely to be higher than that of the bus bar 8. Thus, in the present embodiment, the configuration illustrated in FIG. 9 is employed, as an example. As a result, it has been found that the concentration of the stress can be alleviated (reduced) because an area where the stress is increased lays over an area including the third wall 8e and/or the second curve portion 8g, which is larger than an area defined by the center 8i of the curve portion 8h of the bus bar 8R. Further, according to research by the inventors, it has been found that the bus bar 8 can alleviate (reduce) the concentration of stress when the third wall 8e has a. shape of the bus bar 8 illustrated in FIG. 10 at least at the time of being assembled, as compared to the bus bar 8R.

Further, according to research by the inventors, when an external force exerted in a direction in which the two first walls 8c move closer to each other (an external force Fi in the direction opposite the external force F in FIG. 10), the third wall 8e is bent to be put into a state in which the third wall 8e is convex toward a direction opposite the first walls 8c (away from the front side 3d1) with a larger curvature (curvature radius or bend radius) than the first curve portion 8f and the second curve portion 8g as illustrated by the chain double-dashed line in FIG. 10. It has been found that in also such a case, stress is higher in the area of the third wall 8e and the second curve portions 8g, which is wider than the center 8i of the curve portion 8h of the bus bar 8R, thereby alleviating (reducing) the concentration of stress as compared to the bus bar 8R illustrated in FIG. 11. According to research by the inventors, it has been found that the bus bar 8 can alleviate (reduce) the concentration of stress when the third wall 8e has a shape of the bus bar 8 illustrated by the chain double-dashed line in FIG. 10 at least at the time of being assembled, as compared to the bus bar 8R.

According to research by the inventors, it has been found that the sensitivity of the magnitude of the curvature of the first curve portion 8f with respect to the maximum stress of the bus bar 8 is lower than the sensitivity of the magnitude of the curvature of the second curve portion 8g. It has been also found that the smaller the curvature of the second curve portion 8g, the lower the maximum stress of the bus bar 8. As an example, therefore, from the viewpoint of reduction in stress and manufacturability, etc., it is preferable that the curvature of the first curve portion 8f is larger than the curvature of the second curve portion 8g.

In the present embodiment, as an example, it is preferable to join (couple, fix, connect, or electrically connect) the bus bar 8 and the electrically conductive portion 5 with each other before joining (coupling, fixing, connecting, or electrically connecting) the first component 51 and the second component 52. This is because, when the bus bar 8 and the electrically conductive portion 5 are joined with respect to each other by welding, etc., after the first component 51 and the second component 52 are joined with each other, heat occurring on the joint between the bus bar 8 and the electrically conductive portion 5 is likely to be transmitted to the electrical accumulator 7 through the electrically conductive portion 5 (the connecting portions 5d, 5e).

In the present embodiment, as an example, when the first member 31 and the second member 32 are assembled, the electrical accumulators 7 integrated with the second member 32 through the electrically conductive portion 5 are housed within the chambers 4 provided in the first member 31. In the chambers 4, an electrolyte is placed before being assembled. The depth of the chambers 4 is set so that the electrical accumulators 7 are not in contact with the bottom wall 3a when the first member 31 and the second member 32 of the casing 3 are assembled.

In the present embodiment, as an example, as illustrated in FIG. 2, a boundary 3p (a boundary part, a connecting portion, a connecting part) between the first member 31 and the second member 32 is provided with a metallic layer 10 (a metallic part). The metallic layer 10 is provided across the first member 31 and the second member 32 to cover the boundary 3p between the first member 31 and the second member 32. Specifically, recesses (recessed grooves or grooves) 3k, 3m are provided on the periphery of the parts at which the first member 31 and the second member 32 are joined (the parts 3i1 3i2 of the side wall 3i of the protruding portion 3f). When the first member 31 and the second member 32 are abutted with each other, the recesses 3k, 3m form a recess 3n that opens toward the outside the casing 3 on the side wall 3i of the protruding portion 3f. In other words, the recess 3n contains the recesses 3k, 3m. The boundary 3p is provided in the recess 3n, and the metallic layer 10 is provided within the recess 3n. The recess 3n surrounds the entire perimeter of the protruding portion 3f in which the recess 3n is provided. In the present embodiment, as an example, as illustrated in FIGS. 1 and 2, after the first member 31 and the second member 32 are joined, a metallic material (for example, stainless steel, an aluminum alloy, a nickel alloy, a cobalt alloy, a copper alloy, copper, and tin) is thermally sprayed so as to fill the recess 3n therewith. This makes the salability (airtightness or fluid-tightness) at the joint between the first member 31 and the second member 32 likely to be improved. A metallic material having relatively high thermal conductivity is thermally sprayed (metal spraying) to provide the metallic layer 10 (the metallic part), thereby improving thermal conductivity in the battery assembly 1.

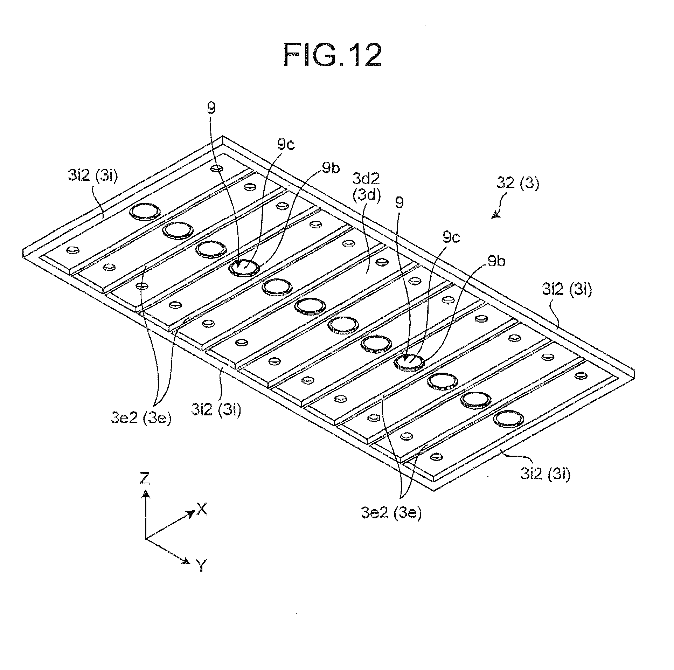

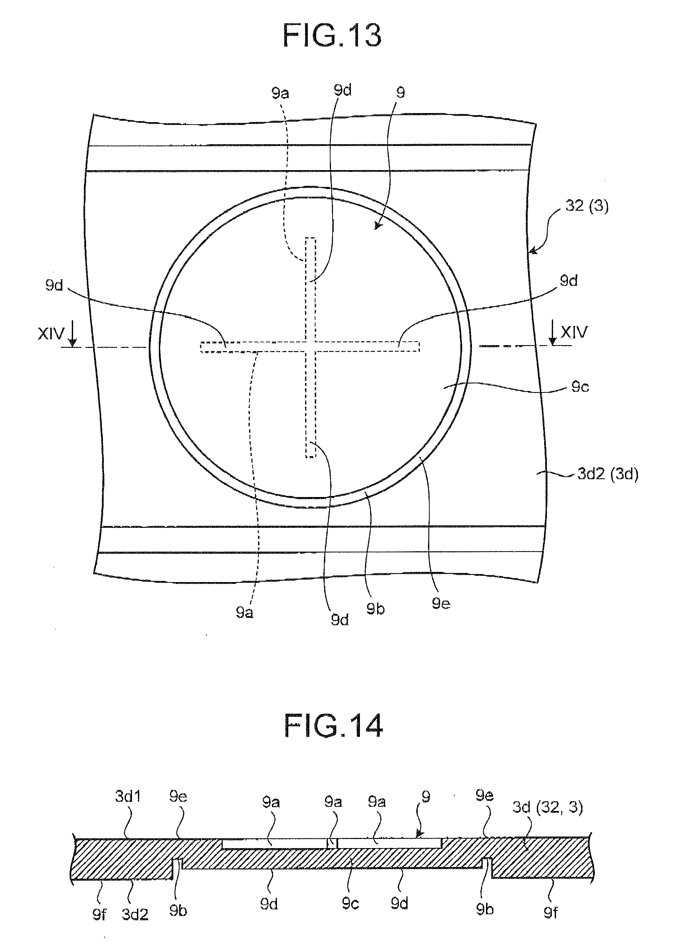

In the present embodiment, as an example as illustrated in FIGS. 1, 3, and 12 to 14, the top wall 3d is provided with a safety valve 9 (a valve) corresponding to each chamber 4. In other words, a plurality of safety valves 9 are provided. The safety valve 9 opens the chamber 4 to the outside by allowing the top wall 3d to break at a thin portion 9d (a weak portion) provided on the top wall 3d due to increased pressure within the chamber 4. The top wall 3d is an example of a wall that is provided on the casing 3 and covers at least portion of the chamber 4.

The thin portion 9d is provided by a plurality of linear grooves 9a (first grooves) provided on the front side 3d1. The grooves 9a may be provided on a back side 3d2 and may be provided on the front side 3d1 and the back side 3d2. In other words, the grooves 9a may be provided on at least either one of the front side 3d1 and the back side 3d2. The front side 3d1 is an example of a first side, and the back side 3d2 is an example of a second side opposite the front side 3d1. The grooves 9a are, as an example, provided radially to form a crisscross shape. In the present embodiment, therefore, a plurality of thin portions 9d are provided, which extend radially.

A groove 9b surrounding the safety valve 9 (a second groove) is provided on the back side 3d2 of the top wall 3d. The groove 9b is provided for each safety valve 9, and the grooves 9b surround the respective safety valves 9. The grooves 9b may be provided on the front side 3d1 and may be provided on the front side 3d1 and the back side 3d2. In other words, the grooves 9b may be provided on at least either one of the front side 3d1 and the back side 3d2 of the top wall 3d. The groove 9b, as an example, surrounds the perimeter of the safety valve 9 circularly. By the groove 9b, the top wall 3d is provided with a thin portion 9e (a second thin-walled part) that extends to surround the thin portions 9d. The thickness of the top wall 3d (wall) of an area 9c that is on the safety valve 9 side of the groove 9b is smaller than the thickness of the top wall 3d of an area 9f that is on the side of the groove 9b opposite the safety valve 9.

According to the foregoing configuration, when pressure within the chamber 4 (the pressure of gas) increases, the thin portion 9d breaks, and the gas within the chamber 4 exits to the outside. When the pressure within the chamber 4 increases, the part in which the groove 9a is provided (the thin portion 9d) becomes deformed toward the outside of the casing 3 more largely, and stress concentrates on the groove 9a and its surrounding area. In the present embodiment, as an example, since the groove 9b is provided, stress concentration is likely to occur at the part in which the groove 9b is provided (the thin portion 9e), and in addition, stress is not likely to concentrate on the outside of the groove 9b. When the top wall 3d (the casing 3) is formed of a synthetic resin, the material is likely to become deformed (is likely to become elongated) as compared to a case in which it is formed of a metallic material. When the groove 9b is not provided, therefore, there is concern that through the action of a load on the top wall 3d, the part in which the groove 9a is provided becomes deformed and elongated, and stress concentrates on the corner between the top wall 3d and the partition wall 3e (the part 3e2), from which a break starts. In this regard, in the present embodiment, as an example, since the groove 9b is provided, the concentration of stress in the corner between the top wall 3d and the partition wall 3e (the part 3e2) is likely to be reduced.

As described above, in the present embodiment, as an example, the bus bar 8 has two first walls 8c, the two second walls 8d, and the third wall 8e. The first walls 8c are extended along the front side 3d1 of the casing 3. The second walls 8d are connected to the two first walls 8c, respectively, through the first curve portions 8f, respectively, and extend in a direction crossing the front side 3d1. The third wall 8e is connected to the two second walls 8d through the second curve portions 8g, respectively, and extends in a direction along the front side 3d1 at a position apart from the front side 3d1 across the two second walls 8d. In the present embodiment, as an example, therefore, stress concentration when an external force is exerted is likely to be alleviated, and local stress is more likely to be reduced.

In the present embodiment, as an example, the battery assembly 1 includes at least one bus bar 8 that is bent to a state in which the third wall 8e is convex toward the front side. According to the present embodiment, as an example, with respect to the bus bar 8 in that state, stress concentration when an external force is exerted is likely to be relaxed, and local stress is more likely to be reduced.

In the present embodiment, as an example, the battery assembly 1 includes at least one bus bar 8 that is bent to a state in which the third wall 8e is convex toward a direction away from the front side. According to the present embodiment, as an example, with respect to the bus bar 8 in that state, stress concentration when an external force is exerted is likely to be alleviated, and local stress is more likely to be reduced.

In the present embodiment, as an example, the battery assembly 1 includes at least one bus bar 8 in which the curvature of the first curve portion 8f is larger than the curvature of the second curve portion 8g. According to the present embodiment, as an example, with respect to the bus bar 8, stress concentration when an external force is exerted is likely to be alleviated, and local stress is more likely to be reduced. As an example, manufacturability is likely to be improved.

In the present embodiment, as an example, the first wall 8c is provided with the protruding portion 8b. According to the present embodiment, as an example, the deformation of the protruding portion 8b is reduced, and as an example, an increase in stress along with the deformation is likely to be reduced.

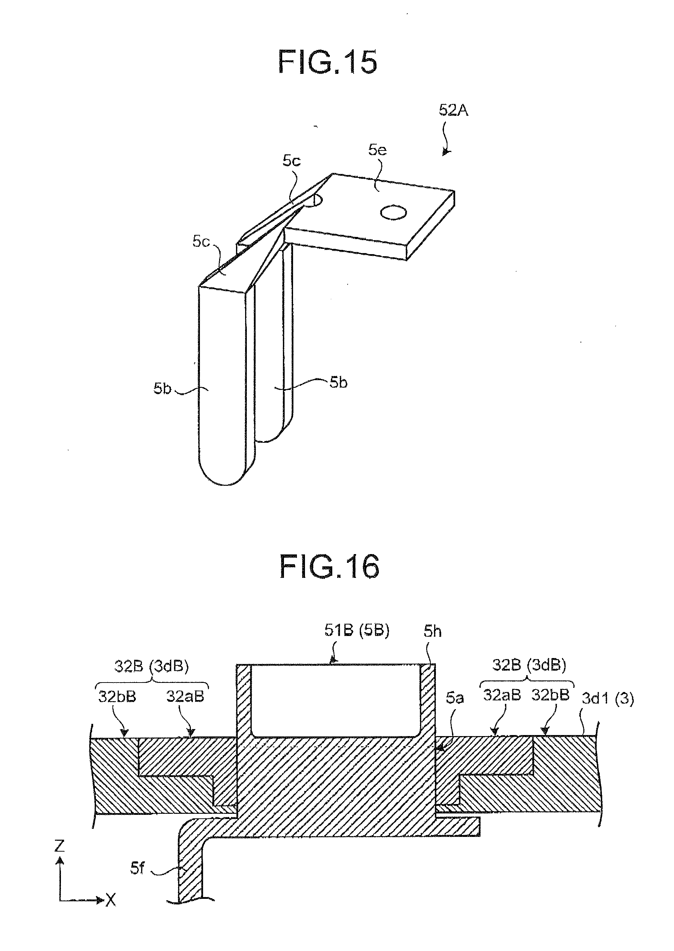

A second component 52A illustrated in FIG. 15 may be used instead of the second component 52 of the first embodiment. According to a first modification, the shape of the third part 5c is different from the above-described embodiment. The same effect as the above-described embodiment can be achieved by also the present modification.

The first part 32a, and the second part 32b (the top wall 3d or the second member 32), a first component 51B (an electrically conductive portion 5B), a first part 32aB, and a second part 32bB (a top wall 3dB or a second member 32B) illustrated in FIG. 16 may be used instead of the first component 51 (the electrically conductive portion 5). A second modification differs from the first embodiment in that the recess and protrusion structure 32c and the protrusion 32d are absent. The same effect as the above-described embodiment can be achieved by also the present modification.

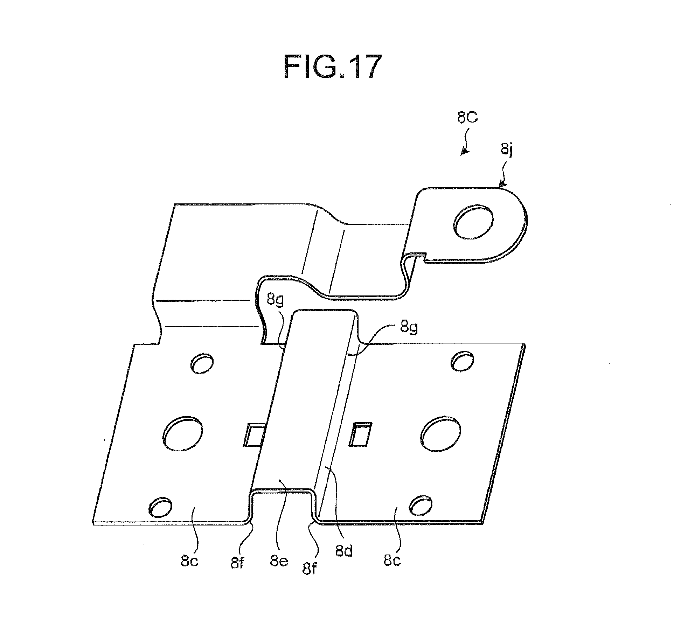

A bus bar 8C illustrated in FIG. 17 may be used instead of the bus bar 8 of the first embodiment. According to a third modification, the presence of an external connection terminal 8j is different from the above-described embodiment. The same effect as the above-described embodiment can be achieved by also the present modification.

While certain embodiments and modifications have been described above, the above-described embodiments and modifications have been presented by way of example only, and are not intended to limit the scope of the invention. These embodiments and modifications may be embodied in a variety of other forms, furthermore, various omissions, substitutions, combinations, and alterations may be made without departing from the spirit of the invention. These embodiments and modifications are included in the scope and spirit of the invention and are included in the invention described in the claims and its equivalents. The components may be partially substituted between the embodiments and modifications. The specifications of each component (structure, type, direction, shape, size, length, width, thickness, height, number, arrangement, position, materials, etc.) may be appropriately changed to be embodied. The electrically conductive portion may be a one-piece component, and the one-piece electrically conductive portion may include a third part. The battery assembly does not necessarily have a projecting part. The accompanying claims and their equivalents are intended to cover such forms or modifications as would fall within the scope and spirit of the inventions.

## Claims

1. A conductive member (8) comprising:
two first walls (8c) each extended along a front surface (3d1) of a casing (3), the casing (3) having the front surface (3d1) and being provided with a plurality of containers (4), a plurality of electric accumulators (7) being housed in the containers (4), respectively, each of the electric accumulators (7) having a cathode (7a) and an anode (7b), one of the first walls (8c) being connected to one of the cathode (7a) and the anode (7b) of one of the electric accumulators (7), other one of the first walls (8c) being connected to one of the cathode (7a) and the anode (7b) of other one of the electric accumulators (7),
two second walls (8d) connected to the first walls (8c) via two first curve portions (8f), respectively, and extended in a direction crossing the front surface (3d1),
a third wall (8e) connected to the second walls (8d) via two second curve portions (8g), respectively, and extended over between the two second walls (8d) in a direction along the front surface (3d1) at a position apart from the front surface (3d1).

2. The conductive member (8) of Claim 1, wherein the third wall (8e) is bent in a state so as to be convex toward a direction approaching the front surface (3d1).

3. The conductive member (8) of Claim 1, wherein the third wall (8e) is bent in a state so as to be convex toward a direction away from the front surface (3d1).

4. The conductive member (8) of any one of Claims 1 to 3, wherein a curvature of each of the first curve portions (8f) is greater than a curvature of each of the second curve portions (8g).

5. The conductive member (8) of any one of Claims 1 to 4, wherein a protruding portion is provided to the first walls (8c).

6. A battery assembly (1) comprising:
the conductive member (8) of any one of Claims 1 to 5;
the casing (3); and
the electric accumulators (7).

7. The battery assembly (1) of Claim 6, wherein
the conductive member (8) includes a plurality of conductive members (8), and
the third wall (8e) of at least one of the conductive members (8) is bent in a state so as to be convex toward a direction approaching the front surface (3d1).

8. The battery assembly (1) of Claim 6 or 7, wherein
the conductive member (8) includes a plurality of conductive members (8), and
the third wall (8e) of at least one of the conductive members (8) is bent in a state so as to be convex toward a direction away from the front surface (3d1).

9. The battery assembly (1) of any one of Claims 6 to 8, wherein
the conductive member (8) includes a plurality of conductive members (8), and,
in at least one of the conductive members (8), a curvature of each of the first curve portions (8f) is greater than a curvature of each of the second curve portions (8g).
